# EUROPEAN PATENT APPLICATION

(11) **EP 4 535 591 A1**
(43) Date of publication of application: **09.04.2025**
(21) Application number: 22944744.6
(22) Date of filing: 30.05.2022
(51) Int. Cl.: H02J 3/38, H02M 7/48

(54) **POWER CONVERSION DEVICE AND CONTROL DEVICE**

(71) Applicant: MITSUBISHI ELECTRIC CORPORATION, Chiyoda-ku Tokyo 100-8310 (JP)
(72) Inventor: HAMANAKA, Kota, Tokyo 100-8310 (JP); UDA, Ryosuke, Tokyo 100-8310 (JP); MUKUNOKI, Kaho, Tokyo 100-8310 (JP); FUJII, Toshiyuki, Tokyo 100-8310 (JP); TOI, Takato, Tokyo 100-8310 (JP)
(74) Representative: Witte, Weller & Partner Patentanwälte mbB
(86) International application number: PCT/JP2022/021899
(87) International publication number: WO 2023/233454

(57) **Abstract**

A power conversion device (200) includes a power storage element (40), a power converter (20), and a control device (100). The control device (100) includes: a power generator simulation unit (60) to simulate characteristics of a synchronous power generator based on an active power command value and active power of a power system, to generate an angular frequency deviation; a constant setting unit (54) to set at least one of an inertia constant and a damping constant of the synchronous power generator, based on an AC voltage of the power system; a phase generation unit (85) to generate a reference phase of an output voltage of the power converter, based on the angular frequency deviation and a reference angular frequency; and a signal generation unit (103) to generate a control signal for the power converter, based on the reference phase and a reference voltage command value for the output voltage of the power converter. When the AC voltage of the power system fluctuates, the constant setting unit (54) sets at least one of the inertia constant and the damping constant such that active power to be inputted and outputted between the power system and the power converter decreases.

## Description

### TECHNICAL FIELD

The present disclosure relates to a power conversion device and a control device.

### BACKGROUND ART

In recent years, many dispersed-type power sources using renewable energy such as solar power generation facilities have been introduced into power systems. It is often the case that a dispersed-type power source is connected to a power system via a power converter. Therefore, if more dispersed-type power sources are connected to a power system, the ratio of synchronous generators connected to the power system decreases, and inertial energy in the power system decreases. Thus, there has been proposed virtual synchronous generator control that compensates for decreased inertial energy by causing a power converter to perform a behavior similar to that of a synchronous generator.

A power converter including the virtual synchronous generator control is controlled to simulate a behavior in a case where a synchronous power generator to be simulated is connected to a power system. For example, a control device according to Japanese Patent Laying-Open No. 2019-176584 (PTL 1) calculates a virtual inertia value based on the specifications and operation state of a dispersed power source, and sets a virtual inertia in a power conversion device based on one of the calculated virtual inertia value and a requested inertia value requested from a system operator.

### CITATION LIST

### PATENT LITERATURE

PTL 1: Japanese Patent Laying-Open No. 2019-176584

### SUMMARY OF INVENTION

### TECHNICAL PROBLEM

A voltage-controlled power converter including the virtual synchronous generator control operates as a voltage source that can output an alternating current (AC) voltage having a voltage phase and a voltage amplitude different from those of a system voltage. When a system accident or the like occurs in such a power converter, a phase difference is generated between the AC voltage of the power converter and the system voltage, and the AC voltage decreases, causing input/output of active power in the power converter. On this occasion, for example, in a case where a power source (for example, a storage battery or the like) connected to the power converter has a relatively small capacity, when the input/output of the active power increases, a direct current (DC) voltage of the power converter fluctuates and results in an overvoltage. As a result, the power converter is stopped for protection.

An object in an aspect of the present disclosure is to provide a power conversion device and a control device which allow a power converter performing control that simulates a synchronous power generator, to stably continue operation.

### SOLUTION TO PROBLEM

A power conversion device according to an embodiment includes a power storage element, a power converter to perform power conversion between the power storage element and a power system, and a control device to cause the power converter to operate as a voltage source. The power converter converts DC power outputted from the power storage element into AC power, and outputs the AC power to the power system. The control device includes: a power generator simulation unit to simulate characteristics of a synchronous power generator based on an active power command value and active power of the power system, to generate an angular frequency deviation; a constant setting unit to set at least one of an inertia constant and a damping constant of the synchronous power generator, based on an AC voltage of the power system; a phase generation unit to generate a reference phase of an output voltage of the power converter, based on the angular frequency deviation and a reference angular frequency; and a signal generation unit to generate a control signal for the power converter, based on the reference phase and a reference voltage command value for the output voltage of the power converter. When the AC voltage of the power system fluctuates, the constant setting unit sets at least one of the inertia constant and the damping constant such that active power to be inputted and outputted between the power system and the power converter decreases.

According to another embodiment, provided is a control device to cause a power converter to operate as a voltage source, the power converter performing power conversion between a power storage element and a power system. The power converter converts DC power outputted from the power storage element into AC power, and outputs the AC power to the power system. The control device includes: a power generator simulation unit to simulate characteristics of a synchronous power generator based on an active power command value and active power of the power system, to generate an angular frequency deviation; a constant setting unit to set at least one of an inertia constant and a damping constant of the synchronous power generator, based on an AC voltage of the power system; a phase generation unit to generate a reference phase of an output voltage of the power converter, based on the angular frequency deviation and a reference angular frequency; and a signal generation unit to generate a control signal for the power converter, based on the reference phase and a reference voltage command value for the output voltage of the power converter. When the AC voltage of the power system fluctuates, the constant setting unit sets at least one of the inertia constant and the damping constant such that active power to be inputted and outputted between the power system and the power converter decreases.

### ADVANTAGEOUS EFFECTS OF INVENTION

According to the present disclosure, a power converter performing control that simulates a synchronous power generator can stably continue operation.

### BRIEF DESCRIPTION OF DRAWINGS

Fig. 1 is a view for illustrating an example of an overall configuration of a power conversion system.
Fig. 2 is a view showing an example of a configuration of a power converter 20.
Fig. 3 is a view showing another example of the configuration of power converter 20.
Fig. 4 is a view showing an exemplary hardware configuration of a control device 100.
Fig. 5 is a block diagram showing an example of a functional configuration of a command generation unit.
Fig. 6 is a block diagram showing an example of a configuration of a constant setting unit.

### DESCRIPTION OF EMBODIMENTS

Hereinafter, the present embodiment will be described with reference to the drawings. In the description below, identical parts will be designated by the same reference numerals. Since their names and functions are also the same, detailed description thereof will not be repeated.

### <Overall Configuration>

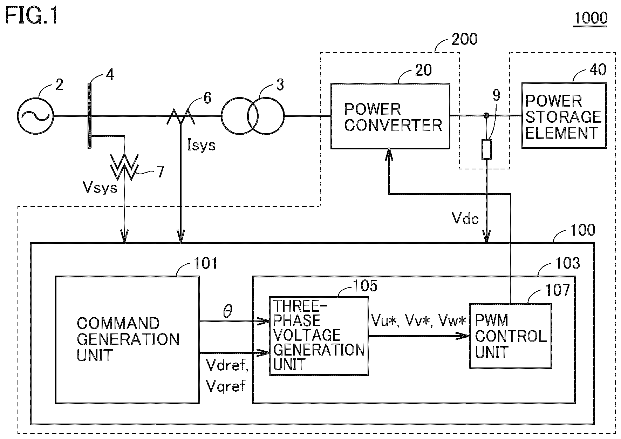

Fig. 1 is a view for illustrating an example of an overall configuration of a power conversion system. A power conversion system 1000 includes a power system 2, a voltage transformer 3, an AC current detector 6, an AC voltage detector 7, a DC voltage detector 9, and a power conversion device 200. Power conversion device 200 includes a control device 100, a power converter 20, and a power storage element 40. Power converter 20 is connected via voltage transformer 3 to an interconnection point 4 of power system 2. Typically, power system 2 is a three-phase AC power source.

Power converter 20 is a power converter that is connected to power storage element 40 and performs power conversion between power storage element 40 and power system 2. Specifically, power converter 20 converts DC power outputted from power storage element 40 into AC power, and outputs the AC power to power system 2 via voltage transformer 3. Further, power converter 20 converts AC power from power system 2 into DC power, and outputs the DC power to power storage element 40. Thereby, power converter 20 charges and discharges the power of power storage element 40. Power converter 20 is controlled by control device 100, as a voltage source that can output an AC voltage having a voltage phase and a voltage amplitude different from those of a system voltage.

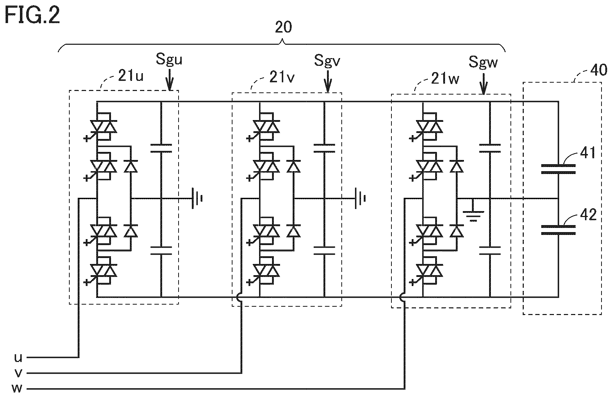

Fig. 2 is a view showing an example of a configuration of power converter 20. Referring to Fig. 2, power storage element 40 includes capacitors 41 and 42 connected in series. Power storage element 40 corresponds to one embodiment of a DC power source. For example, power storage element 40 is constituted by an electric double layer capacitor, and has a capacity which is larger than a capacity of a power storage element constituted by a common capacitor and is smaller than a capacity of a power storage element constituted by a secondary battery. In this case, power converter 20 is configured to complete discharging of power storage element 40 through continuous output of rated power for several seconds (for example, about three seconds).

Power converter 20 has inverters 21u, 21v, and 21w as three-level converters. Each of inverters 21u, 21v, and 21w is a known configuration having four switching elements constituted by triacs, and converts a DC voltage of capacitors connected in parallel with power storage element 40 into a sinusoidal AC voltage by pulse width modulation (PWM) control of the four switching elements. Inverter 21u is connected to a U-phase secondary winding, inverter 21v is connected to a V-phase secondary winding, and inverter 21w is connected to a W-phase secondary winding, of voltage transformer 3.

Control signals Sgu, Sgv, and Sgw to be inputted into inverters 21u, 21v, and 21w, respectively, shown in Fig. 2 each collectively indicate on/off control signals for the four switching elements (four signals) in each inverter which are generated by the PWM control.

Inverters 21u, 21v, and 21w output the sinusoidal AC voltages having phases different from one another by 120 degrees, to three-phase transmission lines, respectively. Thereby, power converter 20 operates as a three-phase three-level converter.

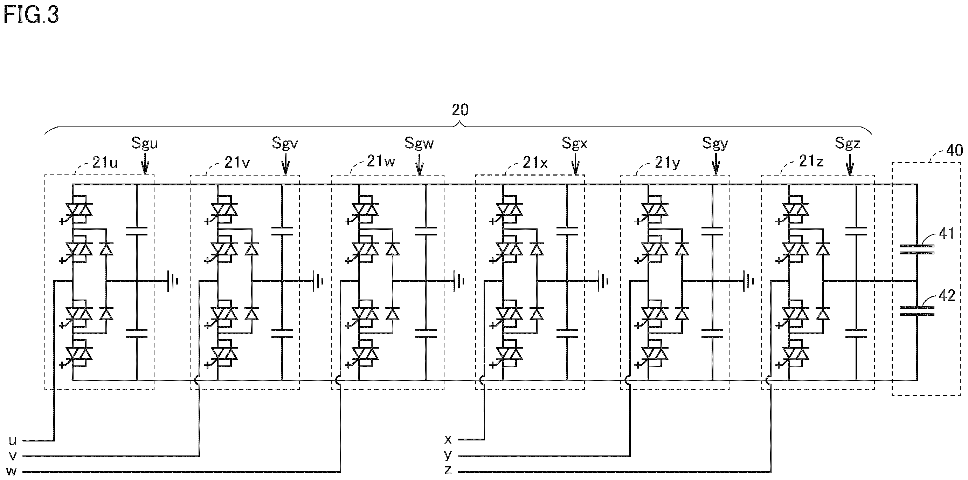

Fig. 3 is a view showing another example of the configuration of power converter 20. Power converter 20 shown in Fig. 3 further includes inverters 21x, 21y, and 21z, in addition to inverters 21u, 21v, and 21w shown in Fig. 2. Secondary windings of voltage transformer 3 are constituted by open windings. Inverters 21u and 21x are respectively connected to a positive electrode side and a negative electrode side of the U-phase secondary winding of voltage transformer 3. Inverters 21v and 21y are respectively connected to a positive electrode side and a negative electrode side of the V-phase secondary winding. Inverters 21w and 21z are respectively connected to a positive electrode side and a negative electrode side of the W-phase secondary winding.

Control signals Sgu, Sgv, Sgw, Sgx, Sgy, and Sgz to be inputted into inverters 21u, 21v, 21w, 21x, 21y, and 21z, respectively, shown in Fig. 3 each collectively indicate on/off control signals for the four switching elements in each inverter which are generated by the PWM control.

It should be noted that power converter 20 can be constituted by a self-commutated converter such as a two-level converter or a modular multilevel converter, as long as it has a DC/AC power conversion function.

Referring to Fig. 1 again, AC current detector 6 detects three-phase AC currents at interconnection point 4 between power system 2 and power converter 20. Specifically, AC current detector 6 detects a U-phase AC current Isysu, a V-phase AC current Isysv, and a W-phase AC current Isysw flowing between voltage transformer 3 and interconnection point 4. AC currents Isysu, Isysv, and Isysw (hereinafter also collectively referred to as an "AC current Isys") are inputted into control device 100.

AC voltage detector 7 detects three-phase AC voltages at interconnection point 4 of power system 2. Specifically, AC voltage detector 7 detects a U-phase AC voltage Vsysu, a V-phase AC voltage Vsysv, and a W-phase AC voltage Vsysw at interconnection point 4. AC voltages Vsysu, Vsysv, and Vsysw (hereinafter also collectively referred to as an "AC voltage Vsys") are inputted into control device 100.

DC voltage detector 9 detects a DC voltage Vdc outputted from power storage element 40. DC voltage Vdc is inputted into control device 100. It should be noted that DC voltage Vdc can also be said as a DC voltage outputted from power converter 20.

Control device 100 is a device to cause power converter 20 to operate as a voltage source. Specifically, control device 100 includes a command generation unit 101 and a signal generation unit 103, as main functional configurations. Each function of command generation unit 101 and signal generation unit 103 is implemented by processing circuitry. The processing circuitry may be dedicated hardware, or a central processing unit (CPU) that executes a program stored in an internal memory of control device 100. When the processing circuitry is dedicated hardware, the processing circuitry is constituted by a field programmable gate array (FPGA), an application specific integrated circuit (ASIC), or a combination thereof, for example.

Command generation unit 101 mainly has a function of simulating characteristics of a synchronous power generator, and generates a reference phase θ of a voltage outputted from power converter 20, and voltage command values (that is, voltage amplitude command values) Vdref and Vqref for the voltage. Reference phase θ is a phase serving as a reference used for control of power converter 20. Vdref is a d-axis voltage command value, and Vqref is a q-axis voltage command value, on a two-axis (that is, d-q axis) rotating coordinate system. Details of command generation unit 101 will be described later. In the present embodiment, it is assumed that, on the rotating coordinate system, a d-axis voltage corresponds to a reactive voltage component, and a q-axis voltage corresponds to an active voltage component. The same applies to a current.

Signal generation unit 103 generates a control signal for power converter 20, based on reference phase θ, d-axis voltage command value Vdref, and q-axis voltage command value Vqref (hereinafter also collectively referred to as a "voltage command value Vref") generated by command generation unit 101, and outputs the control signal to power converter 20. Specifically, signal generation unit 103 includes a three-phase voltage generation unit 105 and a PWM control unit 107.

Three-phase voltage generation unit 105 generates three-phase sinusoidal voltages Vu*, Vv*, and Vw* by two-phase/three-phase transformation, based on reference phase θ, d-axis voltage command value Vdref, and q-axis voltage command value Vqref.

PWM control unit 107 performs pulse width modulation on each of three-phase sinusoidal voltages Vu*, Vv*, and Vw*, to generate a control signal as a PWM signal. For example, PWM control unit 107 generates control signal Sgu, Sgv, Sgw for the four switching elements of each of inverters 21u, 21v, and 21w shown in Fig. 2. PWM control unit 107 outputs the control signal to power converter 20. Typically, the control signal is a gate control signal for controlling ON and OFF of each switching element included in power converter 20.

### <Hardware Configuration>

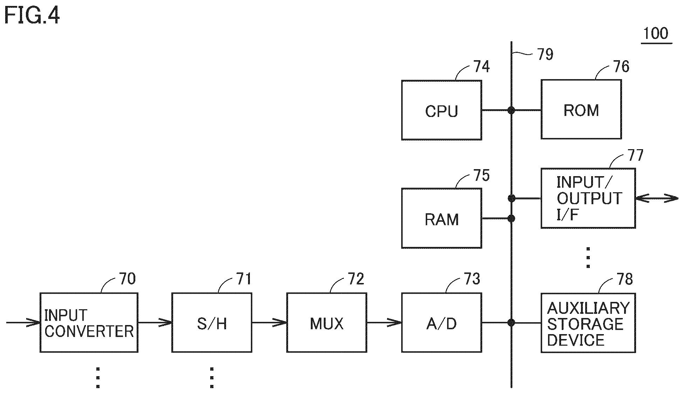

Fig. 4 is a view showing an exemplary hardware configuration of control device 100. Fig. 4 shows an example in which control device 100 is constituted by a computer.

Referring to Fig. 4, control device 100 includes one or more input converters 70, one or more sample hold (S/H) circuits 71, a multiplexer 72, an A/D converter 73, one or more CPUs 74, a random access memory (RAM) 75, a read only memory (ROM) 76, one or more input/output interfaces 77, and an auxiliary storage device 78. Further, control device 100 includes a bus 79 that mutually connects the components.

Input converter 70 has an auxiliary transformer for each input channel. Each auxiliary transformer converts a signal detected by each detector in Fig. 1 into a signal having a voltage level suitable for subsequent signal processing.

S/H circuit 71 is provided for each input converter 70. S/H circuit 71 samples a signal indicating the amount of electricity received from corresponding input converter 70 using a specified sampling frequency, and holds the signal.

Multiplexer 72 sequentially selects the signals held in a plurality of sample hold circuits 71. A/D converter 73 converts a signal selected by multiplexer 72 into a digital value. It should be noted that A/D conversion may be performed in parallel on detection signals of a plurality of input channels by providing a plurality of A/D converters 73.

CPU 74 controls entire control device 100, and performs computation processing according to a program. RAM 75 as a volatile memory and ROM 76 as a nonvolatile memory are used as main storages for CPU 74. ROM 76 stores programs, set values for signal processing, and the like. Auxiliary storage device 78 is a nonvolatile memory having a capacity larger than that of ROM 76, and stores programs, data of electricity amount detection values, and the like.

Input/output interface 77 is an interface circuit in communicating between CPU 74 and an external device.

It should be noted that it is also possible to constitute at least a portion of control device 100 using a circuit such as an FPGA and an ASIC, unlike the example in Fig. 2.

### <Configuration of Command Generation Unit>

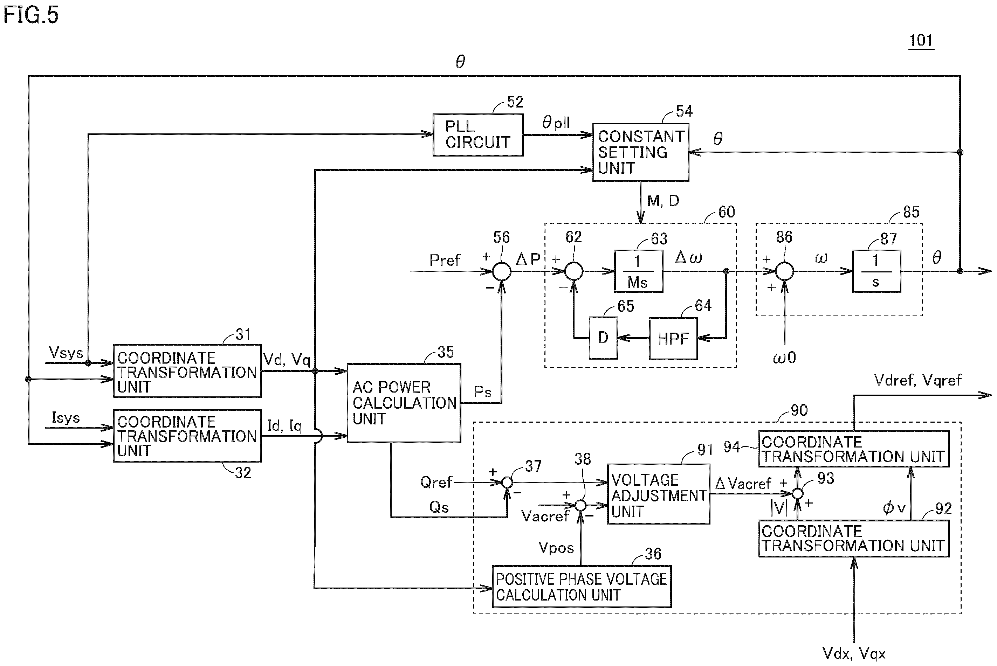

Fig. 5 is a block diagram showing an example of a functional configuration of the command generation unit. Referring to Fig. 5, command generation unit 101 includes a phase locked loop (PLL) circuit 52, a constant setting unit 54, a power generator simulation unit 60, a phase generation unit 85, and a voltage command generation unit 90. Command generation unit 101 further includes coordinate transformation units 31 and 32, and an AC power calculation unit 35. In the following description, it is assumed that each signal is converted on a per unit (PU) basis inside control device 100 (specifically, command generation unit 101).

### (Reference Phase of Output Voltage)

A functional configuration related to generation of reference phase θ of the output voltage of power converter 20 will be described.

PLL circuit 52 detects a voltage phase θpll of AC voltage Vsys detected by AC voltage detector 7. Specifically, PLL circuit 52 uses a feedback loop and receives AC voltage Vsys as an input signal, and outputs a signal having a phase synchronized with that of the input signal, as a detection value of the voltage phase (that is, θpll) of AC voltage Vsys.

Constant setting unit 54 sets an inertia moment (that is, an inertia constant) M and a damping constant D of a rotor of the synchronous power generator (that is, a virtual synchronous power generator) to be simulated by power converter 20 (for example, power generator simulation unit 60), based on AC voltage Vsys of power system 2. Specifically, when AC voltage Vsys of power system 2 fluctuates, constant setting unit 54 sets inertia constant M and damping constant D such that active power to be inputted and outputted between power system 2 and power converter 20 decreases. Details of constant setting unit 54 will be described later.

A subtractor 56 outputs a deviation ΔP (= Pref-Ps) between active power Ps calculated by AC power calculation unit 35 and an active power command value Pref.

Active power command value Pref is, for example, an active power command value P1 in response to a request from a higher-level device. Further, active power command value Pref may be an active power command value P2 as a frequency adjustment amount corresponding to governor-free operation of the synchronous power generator when the frequency of power system 2 fluctuates. Furthermore, active power command value Pref may be an active power command value P3 for causing DC voltage Vdc of power storage element 40 to follow a DC voltage command value. Alternatively, active power command value Pref may be an addition value obtained by adding at least two of active power command values P1 to P3.

Power generator simulation unit 60 simulates the characteristics of the synchronous power generator based on active power command value Pref and active power Ps outputted from the power converter, to generate an angular frequency deviation Δω. Specifically, power generator simulation unit 60 includes a subtractor 62, an integrator 63, a high pass filter 64, and a proportioner 65.

Integrator 63 time-integrates an output value of subtractor 62, and outputs angular frequency deviation Δω. In Fig. 5, "M" in integrator 63 is the inertia constant of the synchronous power generator. Angular frequency deviation Δω outputted by integrator 63 corresponds to a difference between an angular frequency of the rotor in the virtual synchronous power generator and a reference angular frequency ω0. Reference angular frequency ω0 is an angular frequency of a reference frequency (for example, 50 Hz or 60 Hz) of power in power system 2.

High pass filter 64 performs high pass filtering on angular frequency deviation Δω, and outputs it to proportioner 65. Proportioner 65 outputs a multiplication value "D×Δω" obtained by multiplying angular frequency deviation Δω subjected to the high pass filtering, by damping constant D.

Subtractor 62 outputs a value obtained by subtracting multiplication value "D×Δω)" from deviation ΔP, to integrator 63. Integrator 63 time-integrates the output value of subtractor 62, and thereby a damping force of the synchronous power generator in the control of power converter 20 is simulated.

Phase generation unit 85 generates reference phase θ of the output voltage of power converter 20, based on angular frequency deviation Δω and reference angular frequency ω0. Specifically, phase generation unit 85 includes an adder 86 and an integrator 87.

Adder 86 performs computation of adding angular frequency deviation Δω outputted from integrator 63 and reference angular frequency ω0. Specifically, adder 86 adds angular frequency deviation Δω and reference angular frequency ω0, and outputs an angular frequency ω (= Δω+ω0). Integrator 87 time-integrates angular frequency ω to generate reference phase θ.

### (Voltage Command Value for Output Voltage)

A functional configuration related to generation of the voltage command value (that is, the voltage amplitude command value) for the output voltage of power converter 20 will be described.

Coordinate transformation unit 31 performs three-phase/two-phase transformation on AC currents Isysu, Isysv, and Isysw using reference phase θ, to generate a d-axis current Id and a q-axis current Iq. Coordinate transformation unit 32 performs three-phase/two-phase transformation on AC voltages Vsysu, Vsysv, and Vsysw using reference phase θ, to generate a d-axis voltage Vd and a q-axis voltage Vq. Typically, a harmonic component is removed from d-axis current Id and q-axis current Iq, by a moving average filter or the like. Similarly, a harmonic component is removed from d-axis voltage Vd and q-axis voltage Vq, by a moving average filter or the like.

AC power calculation unit 35 calculates active power Ps (for example, Ps = Vd×Id+Vq×Iq) and reactive power Qs (for example, Qs = Vq×Id-Vd×Iq) at interconnection point 4, based on d-axis voltage Vd, q-axis voltage Vq, d-axis current Id, and q-axis current Iq. Active power Ps is inputted into subtractor 56, and reactive power Qs is inputted into a subtractor 37.

Voltage command generation unit 90 generates voltage command value Vref for the output voltage of power converter 20. Voltage command value Vref includes d-axis voltage command value Vdref and q-axis voltage command value Vqref. In the following description, the voltage command value generated by voltage command generation unit 90 may be referred to as a "reference voltage command value". Voltage command generation unit 90 includes a positive phase voltage calculation unit 36, subtractors 37 and 38, a voltage adjustment unit 91, coordinate transformation units 92 and 94, and an adder 93.

Positive phase voltage calculation unit 36 calculates a positive phase voltage Vpos based on d-axis voltage Vd and q-axis voltage Vq. Subtractor 37 calculates a deviation ΔQ (= Qref-Qs) between a reactive power command value Qref and reactive power Qs. Subtractor 38 calculates a deviation ΔVpos (= Vacref-Vpos) between a system voltage command value Vacref and positive phase voltage Vpos.

Voltage adjustment unit 91 selects either an automatic reactive power adjustment mode or an automatic voltage adjustment mode, and generates a voltage amplitude adjustment amount ΔVacref based on the selected mode. Specifically, when voltage adjustment unit 91 selects the automatic reactive power adjustment mode, voltage adjustment unit 91 generates voltage amplitude adjustment amount ΔVacref by feedback control for setting deviation ΔQ to less than or equal to a specified value (for example, 0). When voltage adjustment unit 91 selects the automatic voltage adjustment mode, voltage adjustment unit 91 generates voltage amplitude adjustment amount ΔVacref by feedback control for setting deviation ΔVpos to less than or equal to a specified value (for example, 0). Voltage adjustment unit 91 is constituted by a PI controller, a first-order lag element, and the like.

Coordinate transformation unit 92 transforms a d-axis component of a specified voltage command value (that is, a specified d-axis voltage command value Vdx) and a q-axis component thereof (that is, a specified q-axis voltage command value Vqx), into an amplitude |V| and a phase φv. Specified d-axis voltage command value Vdx and specified q-axis voltage command value Vqx are values preset by a system operator or the like. Adder 93 adds amplitude |V| and voltage amplitude adjustment amount ΔVacref. Coordinate transformation unit 94 performs d-q axis transformation on amplitude |V| and phase φv, to generate d-axis voltage command value Vdref (that is, a d-axis component of reference voltage command value Vref) and q-axis voltage command value Vqref (that is, a q-axis component of reference voltage command value Vref).

Signal generation unit 103 in Fig. 1 generates the control signal for power converter 20, based on reference phase θ and reference voltage command value Vref generated by command generation unit 101 described above.

### <Configuration of Constant Setting Unit>

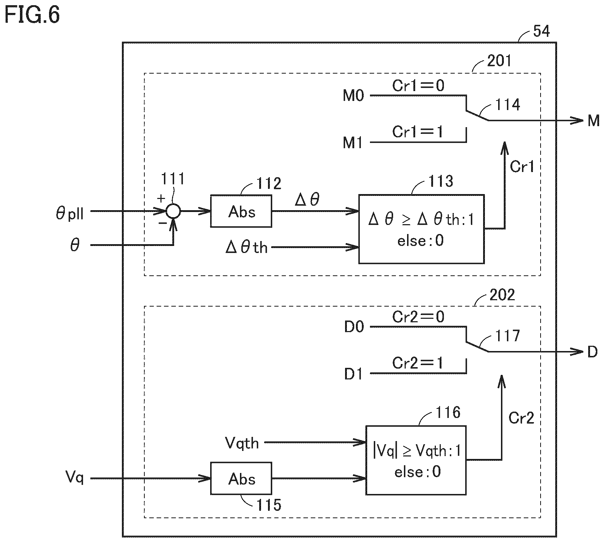

Fig. 6 is a block diagram showing an example of a configuration of the constant setting unit. Referring to Fig. 6, constant setting unit 54 includes a first setting unit 201 and a second setting unit 202.

First setting unit 201 sets inertia constant M based on a phase difference Δθ between phase θpll of AC voltage Vsys of power system 2 and reference phase θ of the output voltage of power converter 20. When phase difference Δθ is more than or equal to a threshold θth, first setting unit 201 decreases inertia constant M. On the other hand, when phase difference Δθ becomes less than threshold θth, first setting unit 201 restores inertia constant M to an initial value. In detail, first setting unit 201 includes a subtractor 111, an absolute value computation element 112, a comparator 113, and a switcher 114.

Subtractor 111 calculates a difference between phase θpll and reference phase θ. Absolute value computation element 112 computes phase difference Δθ as an absolute value of the difference. Comparator 113 compares phase difference Δθ with threshold θth, and outputs a constant Cr1 according to a result of comparison. When phase difference Δθ is more than or equal to threshold θth, comparator 113 outputs constant Cr1 with a value "1". When phase difference Δθ is less than threshold θth, comparator 113 outputs constant Cr1 with a value "0".

When switcher 114 receives constant Cr1 with the value "0", switcher 114 sets the value of inertia constant M to M0. When switcher 114 receives constant Cr1 with the value "1", switcher 114 sets the value of inertia constant M to M1 (where M1<M0).

Specifically, in a normal state where no system accident or the like occurs and phase difference Δθ is less than threshold Δθth, the value of inertia constant M is set to M0 as the initial value. Initial value M0 is, for example, a discharge time constant of power storage element 40. The discharge time constant is a time required to complete discharging when power storage element 40 charged up to a rated voltage is discharged at a rated current. Then, when a system accident or the like occurs and phase difference Δθ becomes more than or equal to threshold Δθth, switcher 114 switches the value of inertia constant M to M1, which is smaller than initial value M0. Subsequently, when the system accident or the like is removed and the normal state is restored, switcher 114 restores (that is, switches) the value of inertia constant M from M1 to initial value M0.

It should be noted that, although the example in Fig. 6 has described an example in which inertia constant M is switched to M0 or M1 according to the result of comparison between phase difference Δθ and threshold Δθth, the present disclosure is not limited to such a configuration. First setting unit 201 may set inertia constant M in proportion to the magnitude of phase difference Δθ. For example, first setting unit 201 may be configured to decrease inertia constant M as phase difference Δθ is larger.

According to the configuration of first setting unit 201 described above, inertia constant M is set small when the phase of AC voltage Vsys fluctuates (that is, when phase difference Δθ increases). This can suppress an increase in input/output of the active power (that is, fluctuation of the active power) with an increase in phase difference Δθ. Therefore, an overvoltage in the DC voltage of power converter 20, which may be generated when the input/output of the active power is large, can be prevented, and as a result, power converter 20 can continue operation without being stopped for protection.

Next, second setting unit 202 sets damping constant D based on active voltage Vq (that is, corresponding to q-axis voltage Vq) of AC voltage Vsys of power system 2. Specifically, when active voltage Vq is less than a threshold Vqth, second setting unit 202 increases damping constant D. On the other hand, when active voltage Vq becomes more than or equal to threshold Vqth, second setting unit 202 restores damping constant D to an initial value. In detail, second setting unit 202 includes an absolute value computation element 115, a comparator 116, and a switcher 117.

Absolute value computation element 115 computes an absolute value of active voltage Vq (hereinafter also referred to as active voltage |Vq|). Comparator 116 compares active voltage |Vq| with threshold Vqth, and outputs a constant Cr2 according to a result of comparison. When active voltage |Vq| is more than or equal to threshold Vqth, comparator 116 outputs constant Cr2 with a value "1". When active voltage |Vq| is less than threshold Vqth, comparator 116 outputs constant Cr2 with a value "0".

When switcher 117 receives constant Cr2 with the value "0", switcher 117 sets the value of damping constant D to D0. When switcher 117 receives constant Cr2 with the value "1", switcher 117 sets the value of damping constant D to D1 (where D1>D0).

Specifically, in a normal state where no system accident or the like occurs and active voltage |Vq| is more than or equal to threshold Vqth, the value of damping constant D is set to D0 as the initial value. Initial value D0 is set, for example, to a damping constant of a synchronous power generator having a capacity identical to a capacity of power converter 20. Then, when a system accident or the like occurs and active voltage |Vq| becomes less than threshold Vqth, switcher 117 switches the value of damping constant D to D1, which is larger than initial value D0. Subsequently, when the system accident or the like is removed and the normal state is restored, switcher 117 restores (switches) the value of damping constant D from D1 to initial value D0.

It should be noted that, although the example in Fig. 6 has described an example in which damping constant D is switched to D0 or D1 according to the result of comparison between active voltage |Vq| and threshold Vqth, the present disclosure is not limited to such a configuration. Second setting unit 202 may set damping constant D in proportion to the magnitude of active voltage |Vq|. For example, second setting unit 202 may be configured to increase damping constant D as active voltage |Vq| is smaller.

According to the configuration of second setting unit 202 described above, damping constant D is set large when the active voltage of AC voltage Vsys fluctuates (that is, when active voltage |Vq| decreases). This can suppress an increase in input/output of the active power (that is, fluctuation of the active power) with a decrease in active voltage |Vq|. Therefore, an overvoltage in the DC voltage of power converter 20, which may be generated when the input/output of the active power is large, can be prevented. Accordingly, power converter 20 can continue operation without being stopped for protection.

### <Advantage>

Since power conversion device 200 according to the present embodiment is a voltage-controlled power converter having virtual synchronous generator control, it can operate stably even in a case where power system 2 is such a minor system that has a short circuit ratio (SCR) of less than or equal to 1. On the other hand, in the case of a voltage-controlled power converter, when a phase difference is generated between the output voltage of power converter 20 and a system voltage due to a system accident or the like, and the output voltage decreases, input/output of the active power of power converter 20 increases. However, in power conversion device 200, inertia constant M and damping constant D are set such that the input/output of the active power decreases according to fluctuation of phase difference Δθ and active voltage |Vq|. Therefore, it is possible to prevent an overvoltage in power converter 20, which is likely to be generated when power storage element 40 has a small capacity (for example, when power storage element 40 does not have a capacity sufficient for the input/output of the active power). Accordingly, power converter 20 can continue operation without being stopped for protection.

### Other Embodiments.

(1) Although the embodiment described above has described a configuration that constant setting unit 54 sets inertia constant M and damping constant D based on AC voltage Vsys of power system 2, the present disclosure is not limited to such a configuration. For example, constant setting unit 54 may set only inertia constant M based on phase difference Δθ. In this case, damping constant D is fixed to initial value D0. Alternatively, constant setting unit 54 may set only damping constant D based on active voltage Vq. In this case, inertia constant M is fixed to initial value M0. Thus, constant setting unit 54 may have only first setting unit 201, or may have only second setting unit 202. Accordingly, constant setting unit 54 only has to be configured to set at least one of inertia constant M and damping constant D, based on AC voltage Vsys of power system 2.
(2) The configuration illustrated as the embodiment described above is an example of the configuration of the present disclosure, and can be combined with another known technique, or can be modified, such as partially omitted, without departing from the gist of the present disclosure. Further, in the embodiment described above, the processing and configuration described in another embodiment may be appropriately adopted and implemented.

It should be understood that the embodiment disclosed herein is illustrative and non-restrictive in every respect. The scope of the present disclosure is defined by the scope of the claims, rather than the description above, and is intended to include any modifications within the scope and meaning equivalent to the scope of the claims.

### REFERENCE SIGNS LIST

2: power system; 3: voltage transformer; 4: interconnection point; 6: AC current detector; 7: AC voltage detector; 9: DC voltage detector; 20: power converter; 21u to 21z: inverters; 31, 32, 92, 94: coordinate transformation unit; 35: AC power calculation unit; 36: positive phase voltage calculation unit; 40: power storage element; 41, 42: capacitor; 52: PLL circuit; 54; constant setting unit; 60: power generator simulation unit; 63, 87: integrator; 64: high pass filter; 65: proportioner; 70: input converter; 71: sample hold circuit; 72: multiplexer; 73: A/D converter; 74: CPU; 75: RAM; 76: ROM; 77: input/output interface; 78: auxiliary storage device; 79: bus; 85: phase generation unit; 90: voltage command generation unit; 91: voltage adjustment unit; 100: control device; 101: command generation unit; 103: signal generation unit; 105: two-phase/three-phase voltage generation unit; 107: PWM control unit; 112, 115: absolute value computation element; 113, 116: comparator; 114, 117: switcher, 200: power conversion device; 201: first setting unit; 202: second setting unit; 1000: power conversion system.

## Claims

1. A power conversion device comprising:
a power storage element;
a power converter to perform power conversion between the power storage element and a power system; and
a control device to cause the power converter to operate as a voltage source,
the power converter converting DC power outputted from the power storage element into AC power, and outputting the AC power to the power system,
the control device including
a power generator simulation unit to simulate characteristics of a synchronous power generator based on an active power command value and active power of the power system, to generate an angular frequency deviation,
a constant setting unit to set at least one of an inertia constant and a damping constant of the synchronous power generator, based on an AC voltage of the power system,
a phase generation unit to generate a reference phase of an output voltage of the power converter, based on the angular frequency deviation and a reference angular frequency, and
a signal generation unit to generate a control signal for the power converter, based on the reference phase and a reference voltage command value for the output voltage of the power converter, wherein
when the AC voltage of the power system fluctuates, the constant setting unit sets at least one of the inertia constant and the damping constant such that active power to be inputted and outputted between the power system and the power converter decreases.

2. The power conversion device according to claim 1, wherein
the constant setting unit includes a first setting unit to set the inertia constant based on a phase difference between a phase of the AC voltage of the power system and the reference phase of the output voltage of the power converter, and
when the phase difference is more than or equal to a first threshold, the first setting unit decreases the inertia constant.

3. The power conversion device according to claim 2, wherein, when the phase difference becomes less than the first threshold, the first setting unit restores the inertia constant to an initial value.

4. The power conversion device according to claim 1, wherein
the constant setting unit includes a first setting unit to set the inertia constant based on a phase difference between a phase of the AC voltage of the power system and the reference phase of the output voltage of the power converter, and
the first setting unit decreases the inertia constant as the phase difference is larger.

5. The power conversion device according to any one of claims 1 to 4, wherein an initial value of the inertia constant is set to a discharge time constant of the power storage element.

6. The power conversion device according to any one of claims 1 to 5, wherein
the constant setting unit further includes a second setting unit to set the damping constant based on an active voltage of the power system, and
when the active voltage is less than a second threshold, the second setting unit increases the damping constant.

7. The power conversion device according to claim 6, wherein, when the active voltage becomes more than or equal to the second threshold, the second setting unit restores the damping constant to an initial value.

8. The power conversion device according to any one of claims 1 to 5, wherein
the constant setting unit further includes a second setting unit to set the damping constant based on an active voltage of the power system, and
the second setting unit increases the damping constant as the active voltage is smaller.

9. The power conversion device according to any one of claims 1 to 8, wherein an initial value of the damping constant is set to a damping constant of the synchronous power generator having a capacity identical to a capacity of the power converter.

10. The power conversion device according to any one of claims 1 to 9, wherein the power storage element is constituted by an electric double layer capacitor.

11. A control device to cause a power converter to operate as a voltage source, the power converter performing power conversion between a power storage element and a power system, the power converter converting DC power outputted from the power storage element into AC power, and outputting the AC power to the power system,
the control device comprising:
a power generator simulation unit to simulate characteristics of a synchronous power generator based on an active power command value and active power of the power system, to generate an angular frequency deviation;
a constant setting unit to set at least one of an inertia constant and a damping constant of the synchronous power generator, based on an AC voltage of the power system;
a phase generation unit to generate a reference phase of an output voltage of the power converter, based on the angular frequency deviation and a reference angular frequency; and
a signal generation unit to generate a control signal for the power converter, based on the reference phase and a reference voltage command value for the output voltage of the power converter, wherein
when the AC voltage of the power system fluctuates, the constant setting unit sets at least one of the inertia constant and the damping constant such that active power to be inputted and outputted between the power system and the power converter decreases.
